# EUROPÄISCHE PATENTSCHRIFT

(11) **EP 3 029 363 B1**
(45) Veröffentlichungstag und Bekanntmachung des Hinweises auf die Patenterteilung: **17.06.2020**
(21) Anmeldenummer: 15197515.8
(22) Anmeldetag: 02.12.2015
(51) Int. Cl.: F16K 99/00

(54) **FLUIDIKVORRICHTUNG UND VERFAHREN ZUM BETREIBEN DERSELBEN**
FLUIDIC DEVICE AND METHOD FOR OPERATING THE SAME
DISPOSITIF FLUIDIQUE ET SONT PROCÉDÉ DE FONCTIONNEMENT

(30) Priorität: 05.12.2014 DE 102014117976
(43) Veröffentlichungstag der Anmeldung: 08.06.2016
(73) Patentinhaber: BiFlow Systems GmbH, 09126 Chemnitz (DE)
(72) Erfinder: Haber, Nora, 09131 Chemnitz (DE)
(74) Vertreter: Steiniger, Carmen

(56) Entgegenhaltungen:
- DE-A1- 19 720 482
- JP-A- 2007 170 469
- US-A1- 2002 155 010
- US-A1- 2010 243 078

## Beschreibung

Die vorliegende Erfindung betrifft eine Fluidikvorrichtung mit wenigstens einem einen ersten Fluideingang und einen ersten Fluidausgang aufweisenden ersten Fluidaufnahme- und/oder -leitungsbereich, wenigstens einem einen zweiten Fluideingang und einen zweiten Fluidausgang aufweisenden zweiten Fluidaufnahme- und/oder -leitungsbereich und wenigstens einem zwischen dem ersten Fluidausgang und dem zweiten Fluideingang vorgesehenen Fluidventil, das in einem Öffnungszustand einen Fluidtransportweg zwischen dem ersten Fluidausgang und dem zweiten Fluideingang freigibt. Die Erfindung betrifft ferner ein Verfahren zum Betreiben einer Fluidikvorrichtung, wobei ein Fluidtransportweg zwischen wenigstens einem einen ersten Fluideingang und einen ersten Fluidausgang aufweisenden ersten Fluidaufnahme- und/oder -leitungsbereich und wenigstens einem einen zweiten Fluideingang und einen zweiten Fluidausgang aufweisenden zweiten Fluidaufnahme- und/oder -leitungsbereich mittels wenigstens eines zwischen dem ersten Fluidausgang und dem zweiten Fluideingang vorgesehenen Fluidventils freigegeben wird.

Miniaturisierte Systeme zur Analyse von Fluiden, vorzugsweise Flüssigkeiten, werden im Allgemeinen als "Labore auf dem Chip" oder "Lab-on-a-Chip" bezeichnet. Anwendungsgebiete hierfür sind beispielsweise die Humandiagnostik, Veterinärdiagnosik sowie Umwelt- und Lebensmittelanalytik. Die Systeme bestehen im Allgemeinen aus einer Kartusche, die Flüssigkeiten enthalten kann und in der diese Flüssigkeiten befördert werden können. Oft weisen solche Systeme auch einen Sensorbereich auf, der für die eigentliche Analytik zuständig ist.

Für die Analyse einer Probe ist es häufig erforderlich, Flüssigkeiten definiert zu transportieren. Dies kann sowohl über eine externe Aktorik, z. B. pneumatisch, mechanisch, über externe Pumpen, etc., als auch über eine Aktorik, die Bestandteil der Kartusche ist, erfolgen. Ein Beispiel für eine solche "integrierte" Aktorik ist in der Druckschrift EP 1 844 936 B1 beschrieben.

Neben dem reinen Transport von Flüssigkeiten ist jedoch häufig auch ein gezieltes Schalten von Flüssigkeitsströmen oder ein Einschließen von Flüssigkeiten erforderlich. Dies erfolgt im Allgemeinen über Ventile, also temporäre Verschlussanordnungen. Man kann zwischen normal-offenen und normal-geschlossenen Ventilen unterscheiden. Letztere verschließen einen Bereich des möglichen Transportweges einer Flüssigkeit so lange, bis das Ventil geöffnet wird und den Weg für die Flüssigkeit freigibt.

Ebenso wird ein Piezoaktuator auch in der Druckschrift DE 197 20 482 A1 beschrieben, wobei der Piezoaktuator Teil einer Mirkomembranpumpe ist. Mittels des Piezoaktuators kann ein Fluid aus einem Einlasskanal der Mikromembranpumpe in eine Pumpenkammer der Mirkomembranpumpe und von dieser hin zu einem Auslasskanal der Mirkomembranpumpe transportiert werden.

Die Integration eines normal-geschlossenen Ventils ist beispielsweise für die zuvor beschriebenen Kartuschen erforderlich, um beispielsweise flüssige Reagenzien vorzulagern, oder aber einen Kanal zu einem Sensor zu verschließen, bis die zu analysierende Flüssigkeit tatsächlich zum Sensor transportiert werden soll. Da es sich bei Lab-on-a-Chip Systemen meist um Einweg-Systeme handelt, muss der Ventilmechanismus möglichst kostengünstig integrierbar sein.

Ein Beispiel für ein normal geschlossenes Ventil ist in der Druckschrift WO 2012/069332 A1 beschrieben. Hier erfolgt der Verschluss durch eine verformbare Membran, welche zunächst einen möglichen Flüssigkeitstransportweg verschließt, wobei der Verschluss durch einen Druck der zu bewegenden Flüssigkeit geöffnet werden kann.

Die Druckschrift US 2002/0155010 A1 offenbart ein Ventil, welches in einer Mirkofluidikvorrichtung verwendet werden kann. Das Ventil weist eine durch eine flexible Schicht der Mikrofluidikvorrichtung gebildete Klappe auf, deren Position infolge einer Strömung eines Fluides geändert werden kann.

In der Druckschrift US 2010/0243078 A1 ist eine Dünnschichtventilvorrichtung beschrieben, bei welcher eine zwischen zwei Kammern vorgesehene Öffnung beispielsweise mittels einer Verschlussfolie verschlossen ist. Durch Einwirkung von Wärme; einer Zentrifugalkraft und einer hydrostatischen Kraft wird die Verschlussfolie irreversibel zerstört und das wenigstens in einer der Kammern befindliche Fluid kann von der einen in die andere Kammer oder umgekehrt strömen.

Diese Lösungen besitzt jedoch den Nachteil, dass die Öffnung der Ventile und die Bewegung der zu transportierenden Flüssigkeiten nicht entkoppelt voneinander betrachtet werden können. So muss ein hoher Druck auf die zu transportierenden Flüssigkeiten aufgebracht werden, um die Schließwirkung der Ventile zu überwinden. Das Öffnungsverhalten und der Öffnungszeitpunkt sind damit schwer vorhersagbar. Je nachdem, welcher Druck tatsächlich für die Überwindung der Schließwirkung des jeweiligen Ventils erforderlich war, führt der applizierte Druck auf die zu bewegende Flüssigkeit dazu, dass die resultierende Fließgeschwindigkeit - je nachdem, wie der Druck erzeugt wurde - nur sehr schwer kontrollierbar und vorhersehbar ist.

Die Druckschrift JP 2007 170469 A hingegen beinhaltet ein temperaturempfindliches Ventil, welches einen Ventilkörper mit einem temperaturempfindlichen Gel aufweist. Mit Verringerung oder Erhöhung der Temperatur kontrahiert das Gel bzw. dehnt sich aus, wodurch das Venil geöffnet oder geschlossen werden kann.

Es ist daher die Aufgabe der vorliegenden Erfindung, eine Fluidikvorrichtung und ein Verfahren zum Betreiben derselben zur Verfügung zu stellen, in welchen ein normal-geschlossenes Ventil geöffnet werden kann, ohne für den Vorgang der Ventilöffnung auf das Fluid selbst einwirken zu müssen.

Diese Aufgabe wird in der vorliegenden Erfindung einerseits durch eine Fluidikvorrichtung der oben genannten Gattung gelöst, bei der das Fluidventil einen sich zwischen dem ersten Fluidaufnahme- und/oder -leitungsbereich und dem zweiten Fluidaufnahme- und/oder -leitungsbereich erstreckenden Ventilsitz aufweist; auf einem an den Ventilsitz angrenzenden ersten Öffnungsbereich des ersten Fluidaufnahme- und/oder -leitungsbereiches, auf einer Ventilsitzoberfläche und auf einem an den Ventilsitz angrenzenden zweiten Öffnungsbereich des zweiten Fluidaufnahme- und/oder -leitungsbereiches eine Decklage mittels einer darauf vorgesehenen Klebeschicht vorgesehen ist, wobei die Klebeschicht eine Ventildichtung zwischen der Ventilsitzoberfläche und der Decklage ausbildet; und die Klebeschicht eine sich bei Einwirkung von Wärme und/oder elektromagnetischer Strahlung verringernde Klebewirkung aufweist.

Die erfindungsgemäße Fluidikvorrichtung schafft eine Entkopplung des Ventilmechanismus von der zum Transport des Fluids zum Einsatz kommenden Aktorik. Die steuerbare Ventilwirkung wird dadurch erreicht, dass eine Decklage, welche mindestens auf einer Seite eine Klebeschicht aufweist, deren Klebekraft sich durch Energiezufuhr, wie Wärme oder elektromagnetische Strahlung, reduzieren lässt, zunächst einen möglichen Transportweg eines Fluids verschließt und dadurch ein normal-geschlossenes Ventil ausbildet. Durch vorzugsweise lokale Energiezufuhr kann die Klebekraft der Folie reduziert werden und so der Fluidtransportweg freigegeben werden.

Die Klebeschicht ist aus Gründen der einfacheren Produktion vorzugsweise ganzflächig auf wenigstens einer Seite der Decklage vorgesehen, kann jedoch in bestimmten Ausführungsformen der vorliegenden Erfindung auch nur lokal, insbesondere an den Stellen, an welchen die Decklage mit der Klebeschicht auf den Ventilsitz geklebt werden soll, auf der Decklage vorgesehen sein.

Nach dem Energieeintrag in die Klebeschicht bleibt bei der vorliegenden Erfindung die reduzierte Klebewirkung erhalten. Das heißt, auch dann, wenn kein Energieeintrag mehr erfolgt, bleibt das Ventil geöffnet. Das Ventil schließt danach von selbst nicht und ist damit damit als Einweg-Ventil zu betrachten.

In einer vorteilhaften Ausgestaltung der erfindungsgemäßen Fluidikvorrichtung weist die Klebeschicht sich bei Einwirkung von Wärme ausdehnende Partikel auf. Indem sich die Partikel in der Klebeschicht ausdehnen, hebt sich die Decklage vom Ventilsitz ab, wodurch sich der Fluidtransportweg öffnet. Als vorteilhafte Ausführungsform derartiger Partikel haben sich solche erwiesen, welche über eine thermoplastische Hülle verfügen und mit einem Gas gefüllt sind, sodass die Hülle bei Erwärmung oberhalb ihrer Glasübergangstemperatur erweicht und der aus der höheren Temperatur resultierende Gasdruck im Inneren der Partikel zu einer Ausdehnung der Partikel führt.

In einer anderen Variante der Erfindung kann die Klebeschicht eine sich bei Einwirkung von UV-Strahlung verringernde Klebewirkung aufweisen.

In einer optionalen Ausführungsform der erfindungsgemäßen Fluidikvorrichtung kann eine Decklage verwendet werden, die wenigstens ein elektromagnetische Strahlung absorbierendes und dadurch Wärme erzeugendes Decklagenmaterial aufweist. Dadurch kann über die Strahlungsaufnahme der Decklage die Klebeschicht mittelbar erwärmt und damit die Klebewirkung der Klebeschicht reduziert werden.

Insbesondere aus fertigungstechnischen Gründen ist es bei der erfindungsgemäßen Fluidikvorrichtung günstig, wenn die durch die Decklage abzudeckenden Oberflächen des ersten Fluidausgangs und des zweiten Fluideingangs sowie die Ventilsitzoberfläche auf einem Höhenniveau liegen. Dadurch kann die Decklage mit der darauf vorgesehenen Klebeschicht in einer Ebene auf den Öffnungsbereichen und dem Ventilsitz vorgesehen werden, was die Haftung der Klebeschicht auf dem Ventilsitz, zum Beispiel durch Andrücken der Decklage mit der Klebeschicht gegen die Ventilsitzoberfläche, und eine homogene Überdeckung der Öffnungsbereiche durch die Decklage bei der Herstellung der Fluidikvorrichtung erleichtert.

Besonders von Vorteil ist es bei der erfindungsgemäßen Fluidikvorrichtung, wenn die Decklage mit der Klebeschicht auf seitlich der Öffnungsbereiche vorgesehenen Oberflächenbereichen der Fluidikvorrichtung haftet. Dadurch können die Öffnungsbereiche durchgängig allein mittels der Decklage und der daran vorgesehenen Klebeschicht abgedeckt werden.

In einer bevorzugten Ausbildung der erfindungsgemäßen Fluidikvorrichtung ist die Decklage eine Folie. Folien passen sich besonders gut an unterschiedlichste Oberflächenstrukturen an und eignen sich damit gut zur Abdeckung der Öffnungsbereiche und des Ventilsitzes der Fluidikvorrichtung. Folien können insbesondere mit einer bereits darauf vorgesehenen Klebeschicht, also als Klebefolien, ausgebildet werden. Dabei sind erfindungsgemäß Klebefolien einzusetzen, welche sich mittels Wärmeeintrag oder mittels elektromagnetischer Strahlung, z. B. ultraviolettem Licht, in ihrer Klebkraft reduzieren lassen.

Bei der vorliegenden Erfindung kann der erste und/oder der zweite Fluidaufnahme- und/oder -leitungsbereich beispielsweise ein Fluidreservoir sein, das wenigstens eine Öffnungsbereich aufweist, der durch die Decklage abgedeckt ist. Das Fluidreservoir kann sich dabei in einem Innenhohlraum der Fluidikvorrichtung befinden, wobei insbesondere Wände und Decke des Innenhohlraumes, bis auf dessen Öffnungsbereich(e), im Wesentlichen durch Substratmaterial der Fluidikvorrichtung ausgebildet sind.

Es ist aber auch möglich, dass sich der erste und/oder der zweite Fluidaufnahme- und/oder -leitungsbereich an einer Oberfläche eines zur Ausbildung der Fluidikvorrichtung verwendeten Substrates befindet und dort einen Fluidkanal ausbildet. Bei einer solchen Ausbildung ist es günstig, wenn die Decklage über den Fluidkanal gespannt wird, sodass die Decklage eine Kanalabdeckung des Fluidkanals ausbildet.

Bei der erfindungsgemäßen Fluidikvorrichtung kann der Energieeintrag zur Verringerung der Klebewirkung der Klebeschicht durch eine Wärme- oder UV-Bestrahlung mit einer entsprechenden externen Strahlungsquelle erfolgen. In einer speziellen Ausführungsform der vorliegenden Erfindung weist die Fluidikvorrichtung selbst wenigstens ein gegenüber der Ventilsitzoberfläche vorgesehenes Heizelement und/oder wenigstens eine gegenüber der Ventilsitzoberfläche vorgesehene elektromagnetische Strahlungsquelle auf. Bei dieser Ausführungsform der Erfindung ist also das Heizelement und/oder die elektromagnetische Strahlungsquelle bereits in die Fluidikvorrichtung integriert. Dies eröffnet den Vorteil, dass durch eine gezielte lokale Integration der Energiequelle der Energieeintrag ebenfalls gezielt lokal erfolgen kann, sodass insbesondere wärme- oder UV-empfindliche Fluide, die sich in der Fluidikvorrichtung befinden, nicht oder nur vernachlässigbar gering dem lediglich zur Ventilöffnung eingesetzten Energieeintrag ausgesetzt sind und darüber hinaus keine zusätzliche externe Einrichtung zur Zuführung thermischer Energie oder elektromagnetischer Strahlung erforderlich ist.

In einer vorteilhaften Ausführungsform der vorliegenden Erfindung kann/können zum Beheizen und/oder Bestrahlen wenigstens eines Teils der Fluidikvorrichtung wenigstens ein Heizelement und/oder wenigstens eine elektromagnetische Strahlungsquelle vorgesehen sein, wobei das wenigstens eine Heizelement und/oder die wenigstens eine elektromagnetische Strahlungsquelle nicht Teil der Fluidikvorrichtung ist/sind. Hier ist es beispielsweise möglich, dass das Heizelement vorzugsweise im Bereich der Ventildichtung an die Fluidikvorrichtung angedrückt oder andrückbar ist.

In einer geeigneten Ausführungsform der Erfindung können das Heizelement und/oder die elektromagnetische Strahlungsquelle beispielsweise auf einer Leiterplatte vorgesehen sein, die mit einer Fluidikvorrichtungskomponente, in der der erste Fluidaufnahme- und/oder -leitungsbereich, das Fluidventil und der zweite Fluidaufnahme- und/oder -leitungsbereich integriert sind, verbunden ist.

In einer Weiterbildung der erfindungsgemäßen Fluidikvorrichtung ist wenigstens ein dritter Öffnungsbereich des ersten und/oder des zweiten Fluidaufnahme- und/oder -leitungsbereiches mit einer bewegbaren Aktorwand verschlossen. Die bewegbare Aktorwand kann beispielsweise als Pumpaktor genutzt werden, mit dem ein in dem ersten Fluidaufnahme- und/oder -leitungsbereich befindliches Fluid durch den geöffneten Fluidtransportweg in den zweiten Fluidaufnahme- und/oder -leitungsbereich gepumpt werden kann.

Gemäß einer vorteilhaften Ausgestaltung der vorliegenden Erfindung ist die Aktorwand eine verformbare Membran eines elektrochemischen Aktors, wie eines Elektrolyseaktors, und/oder thermisch stimulierbaren Aktors. So kann beispielsweise auf einer einem Fluidaufnahme- und/oder -leitungsbereich der Fluidikvorrichtung gegenüber befindlichen Seite der Aktorwand ein Reservoir mit einer Flüssigkeit und/oder einem Hydrogel und/oder einem flüssigkeitsabsorbierenden Material vorgesehen sein, wobei beispielsweise durch Elektrolyse und/oder Erwärmung Blasen in der Flüssigkeit und/oder dem Hydrogel und/oder dem flüssigkeitsabsorbierenden Material erzeugt werden oder mittels Elektrophorese die Flüssigkeitsaufnahme des Hydrogels verändert und damit das Hydrogel ausgedehnt oder zusammengezogen wird. Bei Erzeugung von Gasblasen führt der resultierende Gasdruck zu einer Verformung der Aktorwand und folglich zu einem Fluidtransport in dem Fluidaufnahme- und/oder -leitungsbereich.

In einer besonders vorteilhaften Ausführungsform der vorliegenden Erfindung können sich das Heizelement und/oder die elektromagnetische Strahlungsquelle beispielsweise auf derselben Leiterplatte befinden, welche auch zur elektrischen Ansteuerung des Auslenkungsmechanismus der Aktorwand dient, also beispielsweise Elektroden zur Durchführung einer Elektrolyse in einer Flüssigkeit oder einem Hydrogel, die bzw. das angrenzend an die Aktorwand vorgesehen ist, aufweist oder kontaktiert oder ein Heizelement kontaktiert, welches thermisch Gasblasen in einem an die Aktorwand angrenzenden Reservoir erzeugt.

Besonders praktikabel ist es, wenn bei der erfindungsgemäßen Fluidikvorrichtung die Aktorwand auf einer dem Ventilsitz gegenüber befindlichen Seite der Fluidikvorrichtung vorgesehen ist. Dadurch wird der Ventilöffnungsmechanismus einfach von dem auf der gegenüber liegenden Seite der Fluidikvorrichtung stattfindenden Pumpmechanismus entkoppelt.

Es hat sich auch als günstig erwiesen, wenn die Aktorwand auf die Decklage aufgeklebt ist oder selbst die Decklage bildet. Das heißt, die Decklage hat hier eine Mehrfachfunktion. Sie ist einerseits erfindungsgemäß mit der Klebeschicht auf dem Ventilsitz aufgeklebt und dient an anderer Stelle als bewegbare Aktorwand oder als Aufnahme für die bewegbare Aktorwand, mit welcher ein in dem ersten und/oder zweiten Fluidaufnahme- und/oder -leitungsbereich befindliches Fluid beispielsweise gepumpt werden kann. Dabei kann die Decklage nur auf einer Seite der Fluidikvorrichtung oder auch auf beiden Seiten der Fluidikvorrichtung vorgesehen und vorzugsweise mit der Klebeschicht auf die jeweilige Seite der Fluidikvorrichtung aufgeklebt sein.

Die Aufgabe wird darüber hinaus durch ein Verfahren der oben genannten Gattung gelöst, bei dem das Fluidventil mit einem sich zwischen dem ersten Fluidaufnahme- und/oder -leitungsbereich und dem zweiten Fluidaufnahme- und/oder -leitungsbereich erstreckenden Ventilsitz ausgebildet ist; auf einem an den Ventilsitz angrenzenden ersten Öffnungsbereich des ersten Fluidaufnahme- und/oder -leitungsbereiches, auf einer Ventilsitzoberfläche und auf einem an den Ventilsitz angrenzenden zweiten Öffnungsbereich des zweiten Fluidaufnahme- und/oder -leitungsbereiches eine Decklage mittels einer darauf vorgesehenen Klebeschicht vorgesehen ist, wobei die Klebeschicht eine Ventildichtung zwischen dem Ventilsitz und der Decklage ausbildet; und wenigstens die auf der Ventilsitzoberfläche vorgesehene Klebeschicht erwärmt und/oder mit elektromagnetischer Strahlung beaufschlagt wird, bis die Klebewirkung der Klebeschicht auf der Ventilsitzoberfläche aufgehoben ist, sich dadurch die Decklage von der Ventilsitzoberfläche ablöst und in diesem abgelösten Bereich der Fluidtransportweg zwischen dem ersten Fluidaufnahme- und/oder -leitungsbereich und dem zweiten Fluidaufnahme- und/oder -leitungsbereich ausbildet.

Mit dem erfindungsgemäßen Verfahren kann man einfach, zeitlich genau und lokal gezielt den Fluidtransportweg zwischen dem ersten Fluidaufnahme- und/oder -leitungsbereich und dem zweiten Fluidaufnahme- und/oder -leitungsbereich freigeben, ohne auf das Fluid selbst einwirken zu müssen. Durch die erfindungsgemäße Entkopplung der Freigabe des Fluidtransportweges vom Fluidtransport sind die Fließgeschwindigkeit und der Druck des Fluids in der Fluidikvorrichtung kontrolliert einstellbar.

Bevorzugte Ausführungsformen der vorliegenden Erfindung, deren Aufbau, Funktion und Vorteile werden im Folgenden anhand von Figuren näher erläutert, wobei,
- Figur 1: schematisch eine Ausführungsform einer erfindungsgemäßen Fluidikvorrichtung mit einem vorderseitig zwischen einem Fluidreservoir und einem Fluidkanal vorgesehenen, geschlossenen Fluidventil in einer geschnittenen Seitenansicht zeigt;
- Figur 2: schematisch die Ausführungsform aus Figur 1 mit geöffnetem Fluidventil zeigt;
- Figur 3: schematisch die Fluidikvorrichtung aus den Figuren 1 und 2 in einer geschnittenen Seitenansicht mit geöffnetem Fluidventil und einem rückseitig vorgesehenen Aktor zeigt, durch den Fluid durch die Fluidikvorrichtung gepumpt wird;
- Figur 4: schematisch eine weitere Ausführungsform einer erfindungsgemäßen Fluidikvorrichtung in einer geschnittenen Seitenansicht zeigt, welche zusätzlich zu dem in Figur 1 gezeigten Fluidventil ein weiteres Fluidventil zwischen zwei Fluidkanälen aufweist;
- Figur 5: schematisch noch eine weitere Ausführungsform einer erfindungsgemäßen Fluidikvorrichtung in einer geschnittenen Seitenansicht zeigt, bei der dem Fluidventil gegenüber ein Heizelement vorgesehen ist;
- Figur 6: schematisch eine nächste Ausführungsform einer erfindungsgemäßen Fluidikvorrichtung in einer geschnittenen Seitenansicht zeigt, bei dem Fluidventil gegenüber eine elektromagnetische Strahlungsquelle vorgesehen ist;
- Figur 7: schematisch noch eine andere Ausführungsform einer erfindungsgemäßen Fluidikvorrichtung mit einem rückseitig vorgesehenen Fluidventil in einer geschnittenen Seitenansicht zeigt, wobei eine Aktorwand eines Aktors auf die Decklage, die das Fluidventil mit der daran vorgesehenen Klebeschicht schließt, geklebt ist;
- Figur 8: schematisch die Ausführungsform der Fluidikvorrichtung von Figur 7 mit zusätzlich in der Aktorwand integriertem Heiz- oder Strahlungselement in einer geschnittenen Seitenansicht zeigt;
- Figur 9: schematisch die Ausführungsform der Fluidikvorrichtung von Figur 7 mit einem zusätzlich in einer zwischen Decklage und Aktorwand vorgesehenen Klebeschicht integrierten Heiz- oder Strahlungselement in einer geschnittenen Seitenansicht zeigt;
- Figur 10: schematisch die Ausführungsform der Fluidikvorrichtung von Figur 7 mit einem in einem Fenster der Aktorwand vorgesehenen Heizungselement in einer geschnittenen Seitenansicht zeigt; und
- Figur 11: schematisch die Ausführungsform der Fluidikvorrichtung von Figur 7 mit einer in einem Fenster der Aktorwand vorgesehenen elektromagnetischen Strahlungsquelle in einer geschnittenen Seitenansicht zeigt.

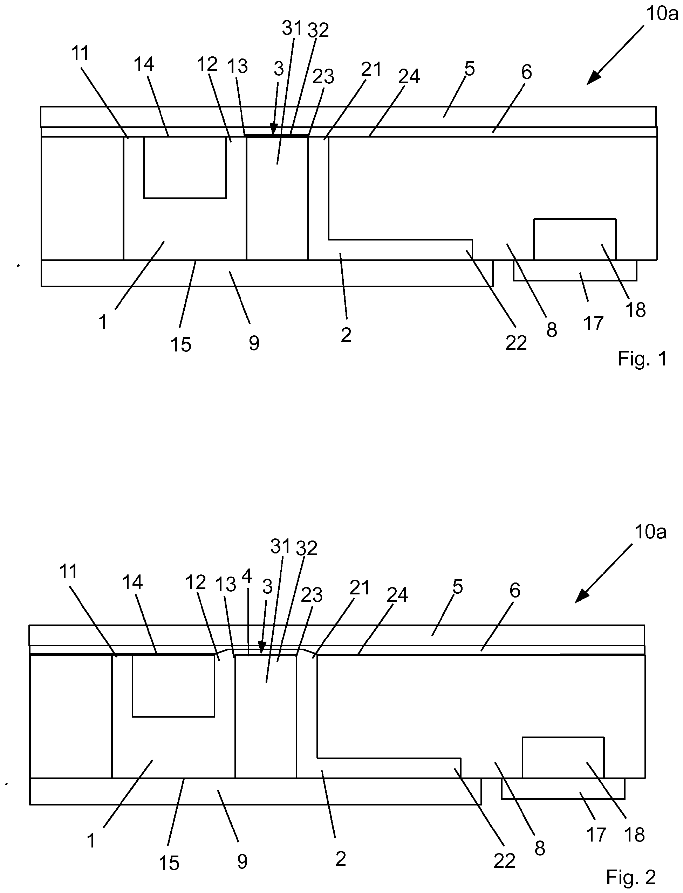

Figur 1 zeigt schematisch eine Ausführungsform einer erfindungsgemäßen Fluidikvorrichtung 10a in einer geschnittenen Seitenansicht. Die Fluidikvorrichtung 10a weist wenigstens eine, aus wenigstens einem Substrat, wie einem Siliziumsubstrat, ausgebildete Fluidikvorrichtungskomponente 8 auf, in welcher wenigstens ein erster Fluidaufnahme- und/oder -leitungsbereich 1 und wenigstens ein zweiter Fluidaufnahme- und/oder -leitungsbereich 2 vorgesehen sind.

Der erste Fluidaufnahme- und/oder -leitungsbereich 1 ist in dem dargestellten Beispiel ein beckenförmiges, in einem Boden- oder Mittelbereich der Fluidikvorrichtungskomponente 8 vorgesehenes Fluidreservoir zur Aufnahme eines Fluids, wie einer Flüssigkeit und/oder eines Hydrogels. Das Fluidreservoir ist über einen ersten Fluideingang 11 mit dem Fluid befüllbar. Das Fluidreservoir weist ferner einen ersten Fluidausgang 12 auf, über den das Fluid aus dem Fluidreservoir herausgeleitet werden soll. Der zweite Fluidaufnahme- und/oder -leitungsbereich 2 ist in dem in Figur 1 gezeigten Beispiel ein zur Weiterleitung des Fluids innerhalb der Fluidikvorrichtung 10a vorgesehener, länglicher Fluidkanal mit einem zweiten Fluideingang 21 und einem zweiten Fluidausgang 22.

Zwischen dem ersten Fluidausgang 12 des ersten Fluidaufnahme- und/oder -leitungsbereiches 1 und dem zweiten Fluideingang 21 des zweiten Fluidaufnahme- und/oder -leitungsbereiches 2 ist ein Fluidventil 3 vorgesehen. Das Fluidventil 3 wird einerseits durch einen Ventilsitz 31, der Bestandteil der Fluidikvorrichtungskomponente 8 ist, und andererseits durch eine auf eine Ventilsitzoberfläche 32 des Ventilsitzes 31 mittels einer Klebeschicht 6 geklebte Decklage 5 ausgebildet. Indem die Klebeschicht 6 fest auf der Ventilsitzoberfläche 32 haftet, wird an dieser Stelle eine Ventildichtung ausgebildet, die in dem in Figur 1 dargestellten geschlossenen Ventilzustand verhindert, dass Fluid aus dem Fluidaufnahme- und/oder -leitungsbereich 1, also dem Fluidreservoir, in den Fluidaufnahme- und/oder -leitungsbereich 2, also den Fluidkanal, übergeht.

Die Decklage 5 mit der daran vorgesehenen Klebeschicht 6 überdeckt die vorderseitigen Öffnungsbereiche des ersten Fluidaufnahme- und/oder -leitungsbereiches 1, nämlich den ersten Fluideingang 11 und den ersten Fluidausgang 12, und des zweiten Fluidaufnahme- und/oder -leitungsbereiches 2, nämlich den zweiten Fluideingang 21.

Um diese Überdeckung zu gewährleisten, haftet die Decklage 5 ferner mit der daran vorgesehenen Klebeschicht 6 an vorderseitigen festen Oberflächenbereichen 14, 24 der Fluidikvorrichtungskomponente 8. Vorzugsweise befinden sich hierbei, wie es anhand des in Figur 1 gezeigten Ausführungsbeispiels ersichtlich ist, die abgedeckten Oberflächen des ersten Fluidausgangs 12 und des zweiten Fluideingangs 21 und die Ventilsitzoberfläche 31 auf einem Höhenniveau.

Die Decklage 5 ist in der gezeigten Ausführungsform eine Folie, speziell eine Klebefolie, an welcher die Klebeschicht 6 bereits vorgesehen ist. In anderen, nicht gezeigten Ausführungsformen der vorliegenden Erfindung kann die Decklage 5 auch eine einfache Folie sein, auf der nur an den Stellen, an welcher die Decklage 5 auf dem Ventilsitz 31 und auf Haftbereichen der Oberflächenbereiche 14, 24 der Fluidikvorrichtungskomponente 8 haften soll, die Klebeschicht 6 vorgesehen ist.

Die Klebeschicht 6 ist unter Normalbedingungen, wie beispielsweis bei Raumtemperatur und bei einfacher Sonneneinstrahlung, gut klebende Schicht. Die Klebewirkung der Klebeschicht 6 verringert sich jedoch bei Einwirkung von Wärme und/der unter Einwirkung von elektromagnetischer Strahlung, wie beispielsweise unter UV-Einwirkung. Wird also der Bereich der Decklage 5 und/oder der Klebeschicht 6, der auf den Ventilsitz 31 geklebt ist, einer Einwirkung von Wärme und/oder UV-Strahlung ausgesetzt, wird die Klebewirkung der Klebeschicht 6 aufgehoben und die Decklage 5 hebt sich von der Ventilsitzoberfläche 32 ab, sodass der in Figur 2 gezeigte Fluidtransportweg 4 zwischen dem ersten Fluidaufnahme- und/oder -leitungsbereich 1 und dem zweiten Fluidaufnahme- und/oder -leitungsbereich 2 geöffnet wird. Dies ermöglicht den Durchgang des Fluids aus dem ersten Fluidaufnahme- und/oder -leitungsbereich 1 in den zweiten Fluidaufnahme- und/oder -leitungsbereich 2 und umgekehrt.

Die Aufhebung der Klebekraft der Klebeschicht 6 ist typischerweise irreversibel, sodass das geöffnete Fluidventil 3 geöffnet bleibt, also ein Einweg-Ventil ist.

Auf der Rückseite der in Figur 1 dargestellten Fluidikvorrichtung 10a sind Abdecklagen 9, 17 vorgesehen, die den ersten Fluidaufnahme- und/oder -leitungsbereich 1, den zweiten Fluidaufnahme- und/oder -leitungsbereich 2 sowie weitere, oben nicht näher beschriebene Fluidaufnahme- und/oder -leitungsbereiche 18 der Fluidikvorrichtung 10a von hinten abdecken.

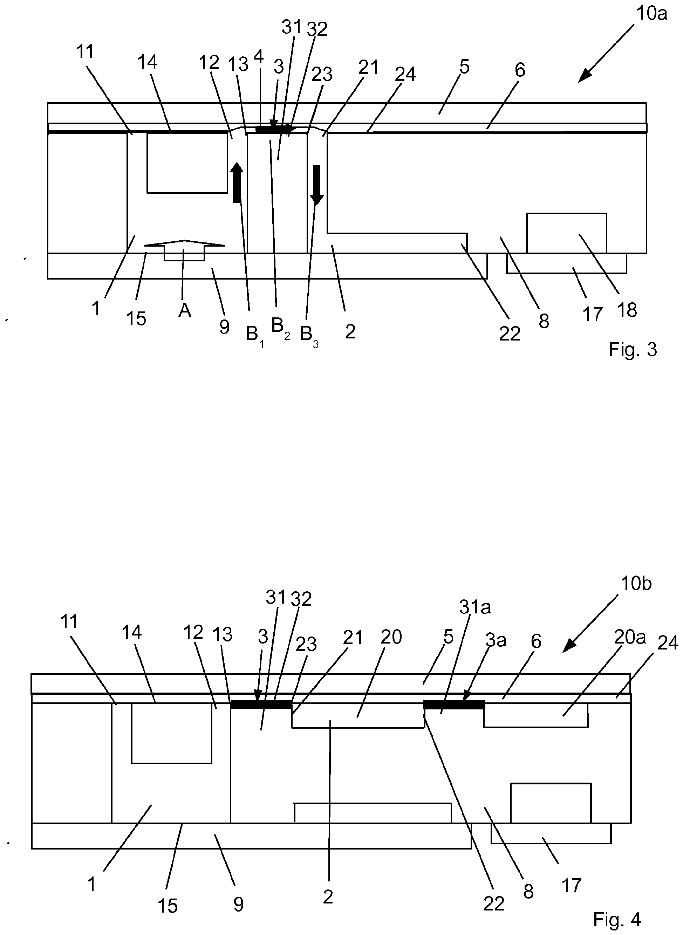

Figur 3 zeigt schematisch nochmals die geöffnete erfindungsgemäßen Fluidikvorrichtung 10a in einer geschnittenen Seitenansicht. Die Abdecklage 9 ist hier eine Aktorwand 9 eines nicht näher dargestellten elektrochemischen Aktors, durch den Fluid durch die Fluidikvorrichtung 10a gepumpt wird.

In den Figuren 2 bis 11 bezeichnen gleiche Bezugszeichen gleiche Komponenten wie in Figur 1, weshalb im Folgenden auf Wiederholungen vermieden wird und auf eine oben bereits erfolgte Beschreibung der entsprechenden Komponenten verwiesen wird.

Figur 4 zeigt schematisch eine weitere Ausführungsform einer erfindungsgemäßen Fluidikvorrichtung 10b in einer geschnittenen Seitenansicht.

Die Fluidikvorrichtung 10b weist zusätzlich zu dem in den Figuren 1 bis 3 gezeigten Fluidventil 3 ein weiteres Fluidventil 3a zwischen zwei Fluidkanälen 20 und 20a auf. Das weitere Fluidventil ist ebenso wie das oben beschriebene Fluidventil 3 aus einem aus der Fluidikvorrichtungskomponente 8 ausgebildeten Ventilsitz 31a und der darauf mit der Klebeschicht 6 aufgeklebten Decklage 5 ausgebildet. Dabei kann auch hier die Klebewirkung der Klebeschicht 6 durch Einwirkung von Wärme und/oder elektromagnetische Strahlung verringert bzw. abgebaut werden, um das Fluidventil 3a zu öffnen und dadurch einen Fluidtransportweg zwischen dem Fluidkanal 20 und dem Fluidkanal 20a zu schaffen.

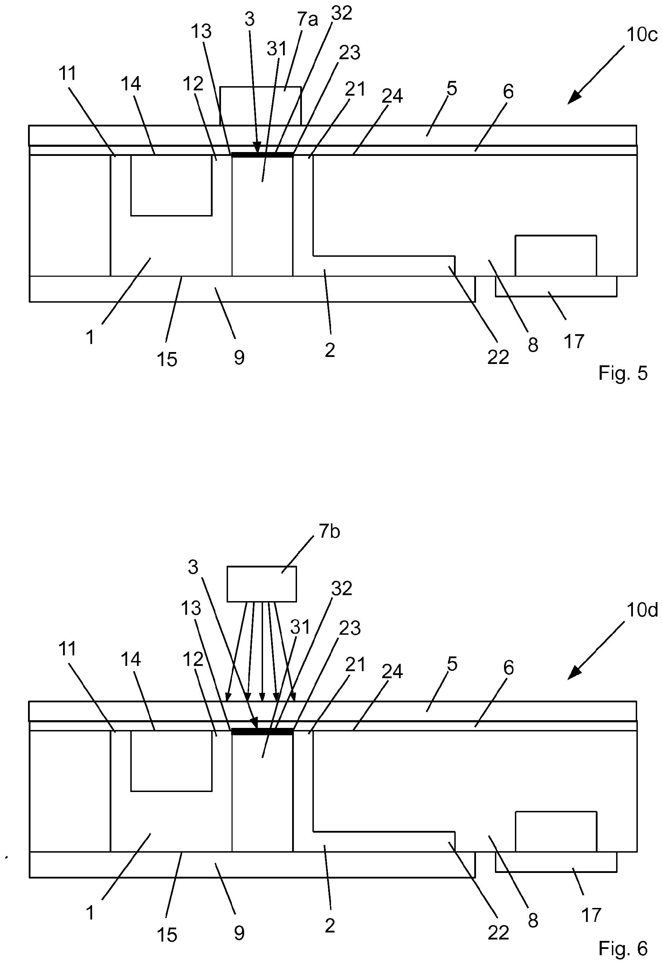

Figur 5 zeigt schematisch noch eine weitere Ausführungsform einer erfindungsgemäßen Fluidikvorrichtung 10c in einer geschnittenen Seitenansicht. Bei der Fluidikvorrichtung 10c ist dem Fluidventil 3 gegenüber ein Heizelement 7a, beispielsweise in Form eines Heizstempels, vorgesehen. Das Heizelement 7a kann als separate Heizvorrichtung vorgesehen sein. Es ist jedoch auch möglich, das Heizelement 7a beispielsweise auf einer Leiterplatte vorzusehen, die mit der Fluidikvorrichtungskomponente 8 der Fluidikvorrichtung 10c verbunden oder verbindbar ist, sodass das Heizelement 7a genau gegenüber dem Ventilsitz 31 vorgesehen werden kann und dadurch das Fluidventil 3 gezielt mit minimalem Wärmeeintrag öffnen kann.

Figur 6 zeigt schematisch eine nächste Ausführungsform einer erfindungsgemäßen Fluidikvorrichtung 10d in einer geschnittenen Seitenansicht. Bei der Fluidikvorrichtung 10d ist dem Fluidventil 3 gegenüber eine elektromagnetische Strahlungsquelle, wie eine UV-Strahlungsquelle 7b, vorgesehen, durch die die Klebewirkung der Klebeschicht 6 im Bereich des Fluidventils 3 herabgesetzt werden kann, um das Fluidventil 3 zu öffnen.

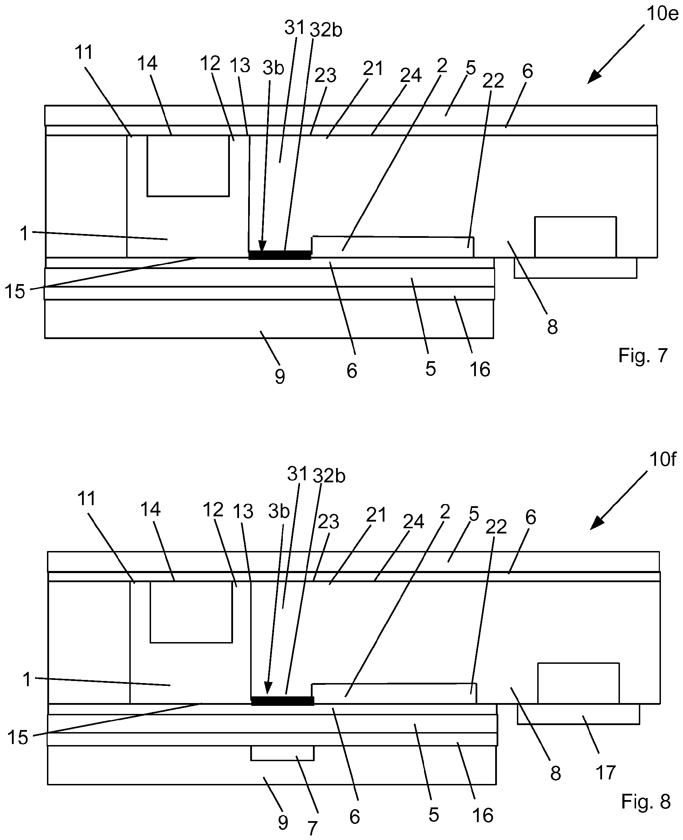

Figur 7 zeigt schematisch noch eine andere Ausführungsform einer erfindungsgemäßen Fluidikvorrichtung 10e mit einem rückseitig vorgesehenen Fluidventil 3b in einer geschnittenen Seitenansicht zeigt. Dabei ist eine Aktorwand 9 eines in Figur 7 nicht näher gezeigten Aktors auf die Decklage 5, die das Fluidventil 3b mit der an der Decklage 5 vorgesehenen Klebeschicht 6 schließt, mittels einer weiteren, sich bei Eintrag von Wärme und/oder elektromagnetischer Strahlung nicht lösenden Klebeschicht 16 geklebt.

Durch die Einwirkung der Aktorschicht 9 kann ein innerhalb des ersten Fluidaufnahme- und/oder -leitungsbereiches 1 befindliches Fluid nach Öffnung des Fluidventils 3b in den ersten Fluidaufnahme- und/oder -leitungsbereich 2, der in Figur 7 in Form eines an der Fluidikvorrichtungsrückseite vorgesehenen Fluidkanals ausgebildet ist, gepumpt werden. Hierfür können gegebenenfalls die Decklage 5, die Klebeschicht 6 und die Klebeschicht 16 in dem Bereich, in dem sich die Aktorwand 9 verformen soll, partiell ausgespart sein.

An der Vorderseite der Fluidikvorrichtung 10e ist kein Fluidventil vorgesehen, aber hier dient eine weitere mit einer Klebeschicht 6 vorgesehene Decklage 5 dazu, den ersten und den zweiten Fluidaufnahme- und/oder -leitungsbereich 1, 2 vorderseitig abzudecken.

Figur 8 zeigt schematisch die Ausführungsform der Fluidikvorrichtung 10e von Figur 7 mit einem zusätzlich in der Aktorwand 9 integrierten Heiz- oder Strahlungselement 7 in einer geschnittenen Seitenansicht.

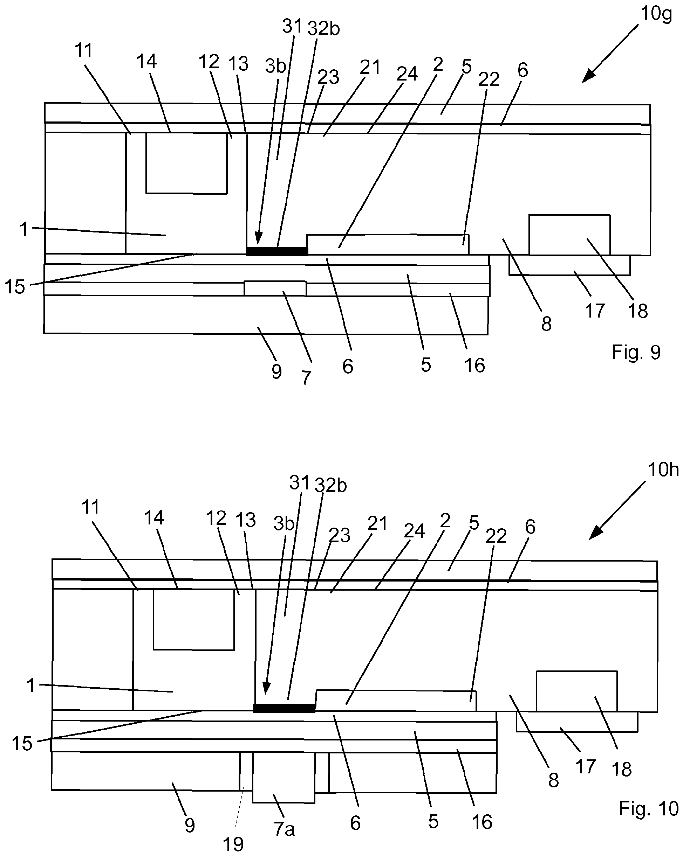

Figur 9 zeigt schematisch eine gegenüber Figur 7 modifizierte Fluidikvorrichtung 10f mit einem zusätzlich in der zwischen der Decklage 5 und der Aktorwand 9 vorgesehenen Klebeschicht 16 integrierten Heiz- oder Strahlungselement 7 in einer geschnittenen Seitenansicht.

Figur 10 zeigt schematisch eine gegenüber Figur 7 modifizierte Ausführungsform einer Fluidikvorrichtung 10g mit einem in einem Fenster 19 der Aktorwand 9 vorgesehenen Heizungselement 7a in einer geschnittenen Seitenansicht.

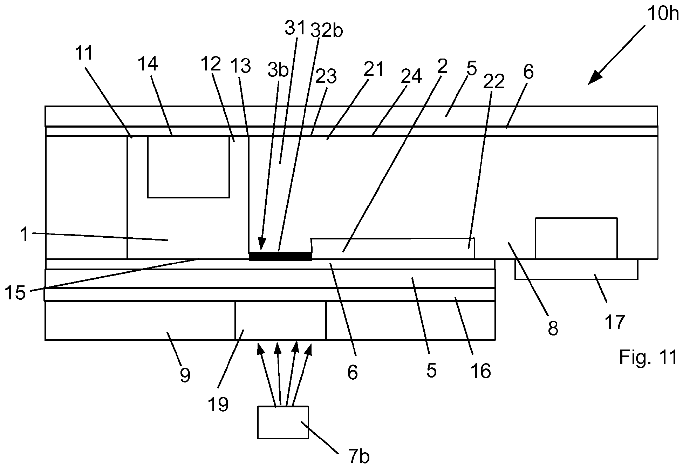

Figur 11 zeigt eine im Vergleich zu Figur 7 modifizierte Fluidikvorrichtung 10h mit einer in einem Fenster 19 der Aktorwand 9 vorgesehenen elektromagnetischen Strahlungsquelle, wie einer UV-Strahlungsquelle 7b, in einer geschnittenen Seitenansicht.

## Patentansprüche

1. Fluidikvorrichtung (10a, 10b, 10c, 10d, 10e, 10f, 10g, 10h), mit wenigstens einer Fluidikvorrichtungskomponente (8) mit einem einen ersten Fluideingang (11) und einen ersten Fluidausgang (12) aufweisenden ersten Fluidaufnahme- und/oder leitungsbereich (1), wenigstens einem einen zweiten Fluideingang (21) und einen zweiten Fluidausgang (22) aufweisenden zweiten Fluidaufnahme- und/oder leitungsbereich (2) und wenigstens einem zwischen dem ersten Fluidausgang (12) und dem zweiten Fluideingang (21) vorgesehenen Fluidventil (3, 3a, 3b), das in einem Öffnungszustand einen Fluidtransportweg (4) zwischen dem ersten Fluidausgang (12) und dem zweiten Fluideingang (21) freigibt,
wobei das Fluidventil (3) einen sich zwischen dem ersten Fluidaufnahme- und/oder -leitungsbereich (1) und dem zweiten Fluidaufnahme- und/oder -leitungsbereich (2) erstreckenden Ventilsitz (31) aufweist;
auf einem an den Ventilsitz (31) angrenzenden ersten Öffnungsbereich (13) des ersten Fluidaufnahme- und/oder -leitungsbereiches (1), auf einer Ventilsitzoberfläche (32, 32b) und auf einem an den Ventilsitz (31) angrenzenden zweiten Öffnungsbereich (23) des zweiten Fluidaufnahme- und/oder -leitungsbereiches (2) eine Decklage (5) mittels einer darauf vorgesehenen Klebeschicht (6) vorgesehen ist, wobei die Klebeschicht (6) eine Ventildichtung zwischen der Ventilsitzoberfläche (32, 32b) und der Decklage (5) ausbildet, wobei die Decklage (5) mit der daran vorgesehenen Klebeschicht (6) auf dem Ventilsitz (31) und auf Haftbereichen von Oberflächenbereichen (14, 24) der Fluidikvorrichtungskomponente (8) haftet; und
die Klebeschicht (6) eine sich bei Einwirkung von Wärme und/oder elektromagnetischer Strahlung verringernde Klebewirkung aufweist.

2. Fluidikvorrichtung nach Anspruch 1, **dadurch gekennzeichnet, dass** die Klebeschicht (6) sich bei Einwirkung von Wärme ausdehnende Partikel aufweist.

3. Fluidikvorrichtung nach wenigstens einem der vorhergehenden Ansprüche, **dadurch gekennzeichnet, dass** die Klebeschicht (6) eine sich bei Einwirkung von UV-Strahlung verringernde Klebewirkung aufweist.

4. Fluidikvorrichtung nach wenigstens einem der vorhergehenden Ansprüche, **dadurch gekennzeichnet, dass** die Decklage (5) wenigstens ein elektromagnetische Strahlung absorbierendes und dadurch Wärme erzeugendes Decklagenmaterial aufweist.

5. Fluidikvorrichtung nach wenigstens einem der vorhergehenden Ansprüche, **dadurch gekennzeichnet, dass** die durch die Decklage (5) abgedeckten Oberflächen des ersten Fluidausgangs (12) und des zweiten Fluideingangs (21) und die Ventilsitzoberfläche (32, 32b) auf einem Höhenniveau liegen.

6. Fluidikvorrichtung nach wenigstens einem der vorhergehenden Ansprüche, **dadurch gekennzeichnet, dass** die Decklage (5) mit der Klebeschicht (6) auf seitlich des ersten und des zweiten Öffnungsbereiches (13, 23) vorgesehenen Oberflächenbereichen (14, 24) der Fluidikvorrichtung (10a, 10b, 10c, 10d, 10e, 19f, 10g, 10h) haftet.

7. Fluidikvorrichtung nach wenigstens einem der vorhergehenden Ansprüche, **dadurch gekennzeichnet, dass** die Decklage (5) eine Folie ist.

8. Fluidikvorrichtung nach wenigstens einem der vorhergehenden Ansprüche, **dadurch gekennzeichnet, dass** der erste und/oder der zweite Fluidaufnahme- und/oder -leitungsbereich (1, 2) einen Fluidkanal (20, 20a) aufweist, wobei die Decklage (5) eine Kanalabdeckung des Fluidkanals (20, 20a) ausbildet.

9. Fluidikvorrichtung nach wenigstens einem der vorhergehenden Ansprüche, **dadurch gekennzeichnet, dass** die Fluidikvorrichtung (10a, 10b, 10c, 10d, 10e, 10f, 10g, 10h) wenigstens ein Heizelement (7a) und/oder wenigstens eine elektromagnetische Strahlungsquelle (7b) aufweist und/oder zum Beheizen und/oder Bestrahlen wenigstens eines Teils der Fluidikvorrichtung (10a, 10b, 10c, 10d, 10e, 10f, 10g, 10h) wenigstens ein Heizelement (7a) und/oder wenigstens eine elektromagnetische Strahlungsquelle (7b) vorgesehen ist, welche(s) der Ventilsitzoberfläche (32, 32b) gegenüber vorgesehen ist.

10. Fluidikvorrichtung nach Anspruch 9, **dadurch gekennzeichnet, dass** das Heizelement (7a) und/oder die elektromagnetische Strahlungsquelle (7b) auf einer Leiterplatte vorgesehen ist bzw. sind, die mit einer Fluidikvorrichtungskomponente (8), in der der erste Fluidaufnahme- und/oder -leitungsbereich (1), das Fluidventil (3, 3a, 3b) und der zweite Fluidaufnahme- und/oder -leitungsbereich (2) integriert sind, verbunden ist.

11. Fluidikvorrichtung nach wenigstens einem der vorhergehenden Ansprüche, **dadurch gekennzeichnet, dass** wenigstens ein dritter Öffnungsbereich (15) des ersten und/oder des zweiten Fluidaufnahme- und/oder -leitungsbereiches (1, 2) mit einer bewegbaren Aktorwand (9) verschlossen ist.

12. Fluidikvorrichtung nach Anspruch 11, **dadurch gekennzeichnet, dass** die Aktorwand (9) eine verformbare Membran eines elektrochemischen Aktors und/oder eines Elektrolyseaktors oder/oder eines thermisch stimulierbaren Aktors ist.

13. Fluidikvorrichtung nach Anspruch 9 und wenigstens einem der Ansprüche 11 oder 12, **dadurch gekennzeichnet, dass** das Heizelement (7a) und/oder die elektromagnetische Strahlungsquelle (7b) auf derselben Leiterplatte wie eine Ansteuervorrichtung zur elektrischen Ansteuerung des Auslenkungsmechanismus der Aktorwand (9) vorgesehen ist bzw. sind.

14. Fluidikvorrichtung nach wenigstens einem der Ansprüche 11 bis 13, **dadurch gekennzeichnet, dass** die Aktorwand (9) auf einer dem Ventilsitz (31) gegenüber befindlichen Seite der Fluidikvorrichtung (10a, 10b, 10c, 10d, 10e, 10f, 10g, 10h) vorgesehen ist.

15. Fluidikvorrichtung nach wenigstens einem der Ansprüche 11 bis 14, **dadurch gekennzeichnet, dass** die Aktorwand (9) auf die Decklage (5) aufgeklebt ist oder selbst die Decklage (5) bildet.

16. Verfahren zum Betreiben einer Fluidikvorrichtung (10a, 10b, 10c, 10d, 10e, 10f, 10g, 10h) mit wenigstens einer Fluidikvorrichtungskomponente (8), wobei ein Fluidtransportweg (4) zwischen wenigstens einem einen ersten Fluideingang (11) und einen ersten Fluidausgang (12) aufweisenden ersten Fluidaufnahme- und/oder - leitungsbereich (1) und wenigstens einem einen zweiten Fluideingang (21) und einen zweiten Fluidausgang (22) aufweisenden zweiten Fluidaufnahme- und/oder - leitungsbereich (2, 2a) mittels wenigstens eines zwischen dem ersten Fluidausgang (12) und dem zweiten Fluideingang (21) vorgesehenen Fluidventils (3, 3a, 3b) freigegeben wird,
wobei das Fluidventil (3) mit einem sich zwischen dem ersten Fluidaufnahme- und/oder -leitungsbereich (1) und dem zweiten Fluidaufnahme- und/oder -leitungsbereich (2) erstreckenden Ventilsitz (31) ausgebildet ist;
auf einem an den Ventilsitz (31) angrenzenden ersten Öffnungsbereich (13) des ersten Fluidaufnahme- und/oder -leitungsbereiches (1), auf einer Ventilsitzoberfläche (32, 32b) und auf einem an den Ventilsitz (31) angrenzenden zweiten Öffnungsbereich (23) des zweiten Fluidaufnahme- und/oder -leitungsbereiches (2) eine Decklage (5) mittels einer darauf vorgesehenen Klebeschicht (6) vorgesehen ist, wobei die Klebeschicht (6) eine Ventildichtung zwischen dem Ventilsitz (31) und der Decklage (5) ausbildet und wobei die Decklage (5) mit der daran vorgesehenen Klebeschicht (6) auf dem Ventilsitz (31) und auf Haftbereichen von Oberflächenbereichen (14, 24) der Fluidikvorrichtungskomponente (8) haftet;
und wenigstens die auf der Ventilsitzoberfläche (32) vorgesehene Klebeschicht (6) erwärmt und/oder mit elektromagnetischer Strahlung beaufschlagt wird, bis die Klebewirkung der Klebeschicht (6) auf der Ventilsitzoberfläche (32, 32b) aufgehoben ist, sich dadurch die Decklage (5) von der Ventilsitzoberfläche (32, 32b) ablöst und in diesem abgelösten Bereich der Fluidtransportweg (4) zwischen dem ersten Fluidaufnahme- und/oder -leitungsbereich (1) und dem zweiten Fluidaufnahme- und/oder -leitungsbereich (2) ausbildet.

## Claims

1. Fluidic device (10a, 10b, 10c, 10d, 10e, 10f, 10g, 10h) with at least one fluidic device component (8) with one first fluid intake and/or conductive area (1) comprising a first fluid inlet (11) and a first fluid outlet (12), at least one second fluid intake and/or conductive area (2) comprising a second fluid inlet (21) and a second fluid outlet (22), and at least one fluid valve (3, 3a, 3b) provided between the first fluid outlet (12) and the second fluid inlet (21), which releases a fluid transport way (4) between the first fluid outlet (12) and the second fluid inlet (21) in an open state,
wherein
the fluid valve (3) comprises a valve seat (31) extending between the first fluid intake and/or conductive area (1) and the second fluid intake and/or conductive area (2);
a top layer (5) is provided on a first opening area (13) of the first fluid intake and/or conductive area (1) adjacent to the valve seat (31), on a valve seat surface (32, 32b) and on a second opening area (23) of the second fluid intake and/or conductive area (2) adjacent to the valve seat (31) by means of an adhesive layer (6) provided thereon, wherein the adhesive layer (6) forms a valve seal between the valve seat surface (32, 32b) and the top layer (5), wherein the top layer (5) along with the adhesive layer (6) provided thereon adheres to the valve seat (31) and the adhesive areas of surface areas (14, 24) of the fluidic device component (8); and
the adhesive layer (6) comprises a decreasing adhesive effect under the influence of heat and/or electromagnetic radiation.

2. Fluidic device according to claim 1, **characterized in that** the adhesive layer (6) comprises particles that expand upon exposure to heat.

3. Fluidic device according to at least one of the preceding claims, **characterized in that** the adhesive layer (6) comprises a decreasing adhesive effect under the influence of UV radiation.

4. Fluidic device according to at least one of the preceding claims, **characterized in that** the top layer (5) comprises at least one top layer material absorbing electromagnetic radiation and thus generating heat.

5. Fluidic device according to at least one of the preceding claims, **characterized in that** the surfaces of the first fluid outlet (12) and the second fluid inlet (21) covered by the top layer (5) and the valve seat surface (32, 32b) lie on one level.

6. Fluidic device according to at least one of the preceding claims, **characterized in that** the top layer (5) adheres to surface areas (14, 24) of the fluidic device (10a, 10b, 10c, 10d, 10e, 10f, 10g, 10h) provided laterally of the first and the second opening area (13, 23) with the adhesive layer (6).

7. Fluidic device according to at least one of the preceding claims, **characterized in that** the top layer (5) is a foil.

8. Fluidic device according to at least one of the preceding claims, **characterized in that** the first and/or the second fluid intake and/or conductive area (1, 2) comprises a fluid channel (20, 20a), wherein the top layer (5) forms a channel cover of the fluid channel (20, 20a).

9. Fluidic device according to at least one of the preceding claims, **characterized in that** the fluidic device (10a, 10b, 10c, 10d, 10e, 10f, 10g, 10h) comprises at least one heating element (7a) and/or at least one electromagnetic radiation source (7b), and/or for heating and/or irradiating of at least a part of the fluidic device (10a, 10b, 10c, 10d, 10e, 10f, 10g, 10h) at least one heating element (7a) and/or at least one electromagnetic radiation source (7b) is provided, which is provided opposite the valve seat surface (32, 32b).

10. Fluidic device according to claim 9, **characterized in that** the heating element (7a) and/or the electromagnetic radiation source (7b) is/are provided on a circuit board, which is connected with a fluidic device component (8), in which the first fluid intake and/or conductive area (1), the fluid valve (3, 3a, 3b) and the second fluid intake and/or conductive area (2) are integrated.

11. Fluidic device according to at least one of the preceding claims, **characterized in that** at least a third opening area (15) of the first and/or the second fluid intake and/or conductive area (1, 2) is closed with a movable actuator wall (9).

12. Fluidic device according to claim 11, **characterized in that** the actuator wall (9) is a deformable membrane of an electrochemical actuator and/or an electrolysis actuator and/or a thermally stimulable actuator.

13. Fluidic device according to claim 9 and at least one of the claims 11 or 12, **characterized in that** the heating element (7a) and/or the electromagnetic radiation source (7b) is/are provided on the same circuit board as the control device for electric control of the deflection mechanism of the actuator wall (9).

14. Fluidic device according to at least one of the claims 11 to 13, **characterized in that** the actuator wall (9) is provided on a side of the fluidic device (10a, 10b, 10c, 10d, 10e, 10f, 10g, 10h) opposite to the valve seat (31).

15. Fluidic device according to at least one of the claims 11 to 14, **characterized in that** the actuator wall (9) is glued on the top layer (5) or forms the top layer (5) itself.

16. Method for operating a fluidic device (10a, 10b,10c, 10d, 10e, 10f, 10g, 10h) with at least one fluidic device component (8), wherein a fluid transport way (4) between at least one first fluid intake and/or conductive area (12) comprising a first fluid inlet (11) and a first fluid outlet (12) and at least one second fluid intake and/or conductive area (2, 2a) comprising a second fluid inlet (21) and a second fluid outlet (22) is released by means of at least one fluid valve (3, 3a, 3b) provided between the first fluid outlet (12) and the second fluid inlet (21),
wherein
the fluid valve (3) is formed by a valve seat (31) extending between the first fluid intake and/or conductive area (1) and the second fluid intake and/or conductive area (2);
a top layer (5) is provided on a first opening area (13) of the first fluid intake and/or conductive area (1) adjacent to the valve seat (31), on a valve seat surface (32, 32b) and on a second opening area (23) of the second fluid intake and/or conductive area (2) adjacent to the valve seat (31) by means of an adhesive layer (6) provided thereon, wherein the adhesive layer (6) forms a valve seal between the valve seat (31) and the top layer (5) and wherein the top layer (5) adheres to the valve seat (31) and the adhesive areas of surface areas (14, 24) of the fluidic device component (8) with the adhesive layer (6) provided thereon;
and at least the adhesive layer (6) provided on the valve seat surface (32) is heated and/or exposed to electromagnetic radiation, until the adhesive effect of the adhesive layer (6) on the valve seat surface (32, 32b) is removed, the top layer (5) thereby detaches itself from the valve seat surface (32, 32b) and the fluid transport way (4) between the first fluid intake and/or conductive area (1) and the second fluid intake and/or conductive area (2) is formed in this detached area.

## Revendications

1. Dispositif fluidique (10a, 10b, 10c, 10d, 10e, 10f, 10g, 10h) avec au moins un composant de dispositif fluidique (8) avec au moins une première zone de réception et / ou de conduite de fluide (1) présentant au moins une première entrée de fluide (11) et une première sortie de fluide (12), une deuxième zone de réception et / ou de conduite de fluide (2) présentant au moins une deuxième entrée de fluide (21) et une deuxième sortie de fluide (22), et au moins un clapet de fluide (3, 3a, 3b) prévu entre la première sortie de fluide (12) et la deuxième entrée de fluide (21), qui ouvre un chemin de transport de fluide (4) entre la première sortie de fluide (12) et la deuxième entrée de fluide (21) dans un état ouvert,
le clapet de fluide (3) présentant un siège de clapet (31) s'étendant entre la première zone de réception et / ou de conduite de fluide (1) et la deuxième zone de réception et / ou de conduite de fluide (2);
une couche de couverture (5) étant prévue au moyen d'une couche adhésive (6) prévue sur celle-ci sur une première zone d'ouverture (13) de la première zone de réception et / ou de conduite de fluide (1) attenante au siège de clapet (31), sur une surface de siège de clapet (32, 32b) et sur une deuxième zone d'ouverture (23) de la deuxième zone de réception et / ou de conduite de fluide (2) attenante au siège de clapet (31), la couche adhésive (6) formant un joint de clapet entre la surface de siège de clapet (32, 32b) et la couche de couverture (5), la couche de couverture (5) adhérant à moyen de la couche adhésive (6) prévu sur elle au siège de clapet (31) et aux zones adhésives de zones de surface (14, 24) du composant de dispositif fluidique (8); et
la couche adhésive (6) ayant un effet adhésif qui diminue lorsqu'elle est exposée à la chaleur et / ou au rayonnement électromagnétique.

2. Dispositif fluidique selon la revendication 1, **caractérisé en ce que** la couche adhésive (6) présente des particules expansives lorsqu'elle est exposée à la chaleur.

3. Dispositif fluidique selon au moins l'une des revendications précédentes, **caractérisé en ce que** la couche adhésive (6) a un effet adhésif qui diminue lorsqu'elle est exposée à un rayonnement UV.

4. Dispositif fluidique selon au moins l'une des revendications précédentes, **caractérisé en ce que** la couche de couverture (5) présente au moins un matériau de couche de couverture qui absorbe le rayonnement électromagnétique et ainsi génère de la chaleur.

5. Dispositif fluidique selon au moins l'une des revendications précédentes, **caractérisé en ce que** les surfaces de la première sortie de fluide (12) et de la deuxième entrée de fluide (21) recouvertes par la couche de couverture (5) et la surface de siège de clapet (32, 32b) sont à un niveau.

6. Dispositif fluidique selon au moins l'une des revendications précédentes, **caractérisé en ce que** la couche de couverture (5) avec la couche adhésive (6) adhère sur des surfaces (14, 24) du dispositif fluidique (10a, 10b, 10c, 10d, 10e, 19f, 10g, 10h) prévues latéralement de la première et la deuxième zone d'ouverture (13, 23).

7. Dispositif fluidique selon au moins l'une des revendications précédentes, **caractérisé en ce que** la couche de couverture (5) est un film.

8. Dispositif fluidique selon au moins l'une des revendications précédentes, **caractérisé en ce que** la première et / ou la deuxième zone de réception et / ou de conduite de fluide (1, 2) présente un canal de fluide (20, 20a), la couche de couverture (5) formant une couverture de canal recouvrant le canal de fluide (20, 20a).

9. Dispositif fluidique selon au moins l'une des revendications précédentes, **caractérisé en ce que** le dispositif fluidique (10a, 10b, 10c, 10d, 10e, 10f, 10g, 10h) comporte au moins un élément chauffant (7a) et / ou au moins une source de rayonnement électromagnétique (7b), et / ou pour chauffer et / ou irradier au moins une partie du dispositif fluidique (10a, 10b, 10c, 10d, 10e, 10f, 10g, 10h) au moins un élément chauffant (7a) et / ou au moins une source de rayonnement électromagnétique (7b) est prévu, étant prévu à l'opposé de la surface du siège de clapet (32, 32b).

10. Dispositif fluidique selon la revendication 9, **caractérisé en ce que** l'élément chauffant (7a) et / ou la source de rayonnement électromagnétique (7b) est ou sont prévus sur une carte de circuit imprimé qui est connectée à un composant de dispositif fluidique (8) dans lequel la première zone de réception et / ou de conduite (1), le clapet de fluide (3, 3a, 3b) et la deuxième zone de réception et / ou de conduite de fluide (2) sont intégrés.

11. Dispositif fluidique selon au moins l'une des revendications précédentes, **caractérisé en ce qu'**au moins une troisième zone d'ouverture (15) de la première et / ou de la deuxième zone de réception et / ou de conduite de fluide (1, 2) est fermée par une paroi d'acteur mobile (9).

12. Dispositif fluidique selon la revendication 11, **caractérisé en ce que** la paroi d'acteur (9) est une membrane déformable d'un acteur électrochimique et / ou d'un acteur d'électrolyse et / ou d'un acteur thermiquement stimulable.

13. Dispositif fluidique selon la revendication 9 et au moins l'une des revendications 11 ou 12, **caractérisé en ce que** l'élément chauffant (7a) et / ou la source de rayonnement électromagnétique (7b) est ou sont prévus sur la même carte de circuit imprimé qu'un dispositif de commande pour électriquement commander le mécanisme de déflexion de la paroi de l'acteur (9).

14. Dispositif fluidique selon au moins l'une des revendications 11 à 13, **caractérisé en ce que** la paroi d'acteur (9) est prévue sur un côté du dispositif fluidique (10a, 10b, 10c, 10d, 10e, 10f, 10g, 10h) en face du siège de clapet (31).

15. Dispositif fluidique selon au moins l'une des revendications 11 à 14, **caractérisé en ce que** la paroi d'acteur (9) est collée sur la couche de couverture (5) ou forme elle-même la couche de couverture (5).

16. Procédé de fonctionnement d'un dispositif fluidique (10a, 10b, 10c, 10d, 10e, 10f, 10g, 10h) avec au moins un composant de dispositif fluidique (8), un chemin de transport de fluide (4) étant déclenché entre au moins une première zone de réception et / ou de conduite de fluide (1) comprenant une première entrée de fluide (11) et une première sortie de fluide (12) et au moins une zone de réception et / ou de conduite (2, 2a) comprenant une deuxième entrée de fluide (21) et une deuxième sortie de fluide (22) au moyen d'au moins un clapet de fluide (3, 3a, 3b) étant prévu entre la première sortie de fluide (12) et la deuxième entrée de fluide (21),
le clapet de fluide (3) étant formé avec un siège de clapet (31) s'étendant entre la première zone de réception et / ou de conduite de fluide (1) et la deuxième zone de réception et / ou de conduite de fluide (2);
une couche de couverture (5) étant prévue au moyen d'une couche adhésive (6) prévue sur celle-ci sur une première zone d'ouverture (13) de la première zone de réception et / ou de conduite de fluide (1) attenante au siège de clapet (31), sur une surface de siège de clapet (32, 32b) et sur une deuxième zone d'ouverture (23) de la deuxième zone de réception et / ou de conduite de fluide (2) attenante au siège de clapet (31), la couche adhésive (6) formant un joint de clapet entre le siège de clapet (31) et la couche de couverture (5), et la couche de couverture (5) adhérant au moyen de la couche adhésive (6) prévu sur elle au siège de clapet (31) et aux zones adhésives de zones de surface (14, 24) du composant de dispositif fluidique (8);
et la couche adhésive (6) prévue au moins sur la surface de siège de clapet (32) étant chauffée et / ou soumise à un rayonnement électromagnétique jusqu'à ce que l'effet adhésif de la couche adhésive (6) sur la surface de siège de clapet (32, 32b) soit éliminé, la couche de couverture (5) ainsi se détache de la surface du siège de clapet (32, 32b) et forme le chemin de transport de fluide (4) entre la première zone de réception et / ou de conduite de fluide (1) et la deuxième zone de réception et / ou de conduite de fluide (2) dans cette zone détachée.
